# EUROPÄISCHE PATENTSCHRIFT

(11) **EP 2 127 966 B1**
(45) Veröffentlichungstag und Bekanntmachung des Hinweises auf die Patenterteilung: **30.05.2012**
(21) Anmeldenummer: 08009963.3
(22) Anmeldetag: 30.05.2008
(51) Int. Cl.: B60R 25/10, G08B 13/16, G01S 15/04

(54) **Verfahren und System zur Innenraumüberwachung**
Method and system for passenger compartment monitoring
Procédé et système de surveillance d'un espace intérieur

(43) Veröffentlichungstag der Anmeldung: 02.12.2009
(73) Patentinhaber: Delphi Technologies, Inc., Troy, MI 48007 (US)
(72) Erfinder: Menne, Roland, 57462 Olpe (DE)
(74) Vertreter: Denton, Michael John

(56) Entgegenhaltungen:
- DE-A1- 2 255 250
- DE-A1- 2 318 927
- GB-A- 1 529 947

## Beschreibung

Die Erfindung betrifft ein Verfahren zur Bereichsüberwachung, insbesondere für Kraftfahrzeuge, bei dem mittels mehrerer Ultraschallsender Ultraschallsignale in den zu überwachenden Bereich gesendet werden, mittels wenigstens eines Ultraschallempfängers reflektierte Ultraschallsignale empfangen und die empfangenen Ultraschallsignale anschließend ausgewertet werden. Sie betrifft ferner ein Ultraschall-Bereichsüberwachungssystem der im Oberbegriff des Anspruchs 7 angegebenen Art.

Eine entsprechende Bereichsüberwachung kann insbesondere Bestandteil eines Kraftfahrzeug-Alarmsystems sein. Dabei kann es zum Beispiel darum gehen, ein unerlaubtes Eindringen in den zu überwachenden Innenraum zu erkennen. Neben einer möglichst hohen Erkennungsrate besteht ein weiteres wichtiges Kriterium in einer möglichst niedrigen Fehlalarmrate.

Ein Verfahren bzw. System der eingangs genannten Art ist in der DE 22 55 250 A1 beschrieben. Das betreffende System dient der Überwachung von Schaukästen, Schaufenstern und Vitrinen. Dabei kann zum Beispiel zur Überwachung mehrerer benachbarter Vitrinen in jeder Vitrine ein Ultraschallgeber angeordnet sein. Die Ultraschallgeber werden über einen gemeinsamen zentralen Ultraschallsender gespeist, um sicherzustellen, dass in allen Vitrinen Ultraschallschwingungen ein- und derselben Frequenz erzeugt werden. Zur Überwachung einer größeren Vitrine können in dieser auch mehrere Ultraschallgeber vorgesehen sein. Auch in diesem Fall werden die Ultraschallgeber wieder mit der gleichen Frequenz betrieben, um Schwebungen zu vermeiden.

Insbesondere für größere Fahrzeuge wie beispielsweise Kleinbusse, Transporter, Busse, usw. werden für eine entsprechende Innenraumüberwachung bereits Ultraschallsysteme mit mehreren aktiven Innenraumsensoren eingesetzt. Dabei wird die Frequenz des jeweiligen Sendesignals dieser aktiven Innenraumsensoren von einem internen Takt, insbesondere Resonator oder Quarz, abgeleitet. Infolge des gleichzeitigen Betriebs von mehreren Sensoren in einem Raum oder in akustisch gekoppelten Räumen kann es nun aber insbesondere infolge einer Bauteilstreuung zu unerwünschten Schwebungen kommen, deren Frequenz von der jeweiligen Resonator- bzw. Quarzfrequenz abhängig ist. Zur Vermeidung dieses Effektes arbeiten bei den bisher bekannten Ultraschallsystemen alle Innen-raumsensoren in Bezug auf die Sendefrequenz synchron. Dabei gibt einer der Sensoren als Master die Sendefrequenz vor, wobei die Sensoren über eine weitere Leitung miteinander kommunizieren. Hierbei ist insbesondere die Synchronisation der Slave-Sensoren auf das Sendesignal des Master-Sensors relativ aufwändig, zumal das Sendesignal des Masters bei den Slave-Sensoren nicht immer vorhanden ist. Entsprechend können für solche Anwendungen auch keine der für den Kraftfahrzeugbereich vorgesehenen Standard-Sensoren eingesetzt werden, was einen entsprechend höheren Entwicklungsaufwand mit sich bringt.

Der Erfindung liegt die Aufgabe zugrunde, ein verbessertes Verfahren sowie ein verbessertes Ultraschall-Bereichsüberwachungssystem der eingangs genannten Art zu schaffen, bei denen die zuvor genannten Probleme beseitigt sind. Dabei soll insbesondere gewährleistet sein, dass trotz des Einsatzes mehrerer Ultraschallsender auf möglichst einfache und entsprechend kostengünstige Weise ein möglichst zuverlässiger Betrieb gewährleistet ist.

Bezüglich des Verfahrens wird diese Aufgabe erfindungsgemäß dadurch gelöst, dass über die Sendefrequenzen der Ultraschallsender die resultierende Schwebungsfrequenz so eingestellt wird, dass sie außerhalb eines vorgebbaren Frequenzbereichs liegt, wobei die Sendefrequenzen der Ultraschallsender zumindest teilweise verschieden sind.

Aufgrund dieser Ausbildung kann die bisher erforderliche Synchronisation zwischen den Sensoren entfallen. Stattdessen sind beispielsweise durch Bauteilstreuungen bedingte Unterschiede in den Sendefrequenzen der Ultraschallsender zugelassen. Anders als bei den bisher bekannten Systemen sind die Sendefrequenzen der Ultraschallsender also zumindest teilweise auch verschieden. Indem über die Sendefrequenzen der Ultraschallsender die resultierende Schwebungsfrequenz so eingestellt wird, dass sie außerhalb eines vorgebbaren Frequenzbereichs liegt, ist auf einfache und entsprechende kostengünstige Weise sichergestellt, dass eventuell auftretende Schwebungen die Funktion des Überwachungssystems nicht mehr stören. Mit dem Wegfall der bisher erforderlichen Synchronisation der Sensoren können nunmehr insbesondere auch für den Kraftfahrzeugbereich vorgesehene standardmäßige Hardware- und/oder Software-Komponenten eingesetzt werden, wodurch die Kosten deutlich reduziert werden.

Die resultierende Schwebungsfrequenz kann beispielsweise über eine entsprechende manuelle oder automatische Konfiguration der Sendefrequenzen der Ultraschallsender vorzugsweise im Fahrzeug entsprechend eingestellt werden.

Die resultierende Schwebungsfrequenz kann jedoch auch über eine entsprechende Konfiguration der Sendefrequenzen der Ultraschallsender in der Bandendeprogrammierung entsprechend eingestellt werden.

Gemäß einer bevorzugten praktischen Ausgestaltung des erfindungsgemäßen Verfahrens wird die resultierende Schwebungsfrequenz über die Sendefrequenzen der Ultraschallsender so gesteuert und/oder geregelt, dass sie außerhalb des vorgebbaren Frequenzbereichs liegt. Es kann also beispielsweise die resultierende Schwebungsfrequenz gemessen, die gemessene Schwebungsfrequenz mit einem Referenzwert, beispielsweise Schwellenwert, verglichen und die tatsächliche Schwebungsfrequenz über die Sendefrequenzen der Ultraschallsender dem Referenzwert nachgeführt werden.

Von Vorteil ist insbesondere auch, wenn die resultierende Schwebungsfrequenz so eingestellt wird, dass sie außerhalb eines vorgebbaren Frequenzbereichs liegt, der in Abhängigkeit von im zu überwachenden Bereich zu erfassenden Bewegungen gewählt ist.

Dabei wird die resultierende Schwebungsfrequenz bevorzugt so eingestellt, dass sie außerhalb eines vorgebbaren Frequenzbereichs liegt, der in Abhängigkeit von den Modulationsfrequenzen gewählt ist, die durch im zu überwachenden Bereich zu erfassenden Bewegungen entstehen.

Das erfindungsgemäße Ultraschall-Bereichsüberwachungssystem, insbesondere für Kraftfahrzeuge, umfasst entsprechend mehrere Ultraschallsender zum Aussenden von Ultraschallsignalen in den zu überwachenden Bereich, wenigstens einen Ultraschallempfänger für den Empfang reflektierter Ultraschallsignale und eine Steuer- und/Auswerteeinrichtung zur Ansteuerung der Ultraschallsender und zur Auswertung der empfangenen Ultraschallsignale. Es zeichnet sich dadurch aus, dass die Steuer- und/oder Auswerteeinrichtung so ausgeführt ist, dass mittels dieser über die Sendefrequenzen der Ultraschallsender die resultierende Schwebungsfrequenz so einstellbar ist, dass sie außerhalb eines vorgebbaren Frequenzbereichs liegt, wobei die sendefrequenzen der Ultraschallsender zumindest teilweise verschieden sind.

Die bisher erforderliche Synchronisation zwischen den Sensoren entfällt. Es sind also beispielsweise durch Bauteilstreuungen bedingte Unterschiede der Sendefrequenzen der Ultraschallsender zulässig. Die Sendefrequenzen der Ultraschallsender können also zumindest teilweise auch verschieden sein, ohne dass dadurch die Zuverlässigkeit des Systems beeinträchtigt wird.

Bei einer zweckmäßigen Ausführungsform des erfindungsgemäßen Ultraschall-Bereichüberwachungssystems wird die resultierende Schwebungsfrequenz über eine entsprechende, vorzugsweise automatische Konfiguration der Sendefrequenzen der Ultraschallsender entsprechend eingestellt.

Die betreffende Konfiguration der Sendefrequenzen der Ultraschallsender ist beispielsweise durch eine entsprechende Bandendeprogrammierung vorgegeben.

Gemäß einer bevorzugten praktischen Ausgestaltung des erfindungsgemäßen Ultraschall-Bereichsüberwachungssystems ist die resultierende Schwebungsfrequenz über die Sendefrequenzen der Ultraschallsender durch die entsprechend ausgeführte Steuer- und/oder Auswerteeinrichtung so steuerbar und/oder regelbar, dass sie außerhalb des vorgebbaren Frequenzbereichs liegt.

Von Vorteil ist insbesondere, wenn die resultierende Schwebungsfrequenz durch die entsprechend ausgeführte Steuer- und/oder Auswerteeinrichtung so einstellbar ist, dass sie außerhalb eines vorgebbaren Frequenzbereichs liegt, der in Abhängigkeit von im zu überwachenden Bereich zu erfassenden Bewegungen gewählt ist.

Dabei ist die resultierende Schwebungsfrequenz durch die entsprechend ausgeführte Steuer- und/oder Auswerteeinrichtung vorzugsweise so einstellbar, dass sie außerhalb eines vorgebbaren Frequenzbereichs liegt, der in Abhängigkeit von den Modulationsfrequenzen gewählt ist, die durch im zu überwachenden Bereich zu erfassende Bewegungen entstehen.

Bevorzugt ist das erfindungsgemäße Verfahren für eine Innenraumüberwachung vorgesehen bzw. das erfindungsgemäße Ultraschall-Bereichsüberwachungssystem für eine solche Innenraumüberwachung ausgelegt.

Mit dem erfindungsgemäßen Verfahren bzw. erfindungsgemäßen Ultraschall-Bereichsüberwachungssystem entfällt also die bisher im Hinblick auf die Sendefrequenz erforderliche Synchronisation der Sensoren. Stattdessen wird die durch gegebenenfalls unterschiedliche Sendefrequenzen hervorgerufene Schwebung bewusst so eingestellt, dass die resultierende Schwebungsfrequenz außerhalb des für eine Bewegung interessanten Frequenzbereichs liegt. Die Erfindung ist insbesondere bei größeren Fahrzeugen wie insbesondere Kleinbussen, Transportern, Bussen usw. anwendbar.

Die Konfiguration der Sendefrequenzen kann beispielsweise manuell oder automatisch im Fahrzeug oder bereits in der Bandendeprogrammierung erfolgen. Da dies einfache Parameter sind, können insbesondere auch die im Kraftfahrzeugbereich vorhandenen standardmäßigen Hardware- und/oder Software-Module eingesetzt werden.

Es ist beispielsweise eine Bereichsüberwachung auf Ultraschallbasis mit Sendefrequenzen der Ultraschallsender im Bereich von etwa 40 kHz denkbar. In diesem Fall sind nur die durch alarmrelevante Bewegungen entstehenden Modulationsfrequenzen unterhalb 1 kHz interessant. Werden im Innenraum beispielsweise zwei Ultraschallsender oder zwei Anlagen mit Sendefrequenzen von beispielsweise 39 kHz bzw. z.B. 41 kHz. eingesetzt, so liegt die entstehende Schwebungsfrequenz von 2 kHz außerhalb des für einen Bewegungsalarm interessierenden Bereiches und kann durch eine entsprechende Hardware und/oder Software ausgefiltert werden.

Selbst dann, wenn die Sendefrequenzen noch weiter auseinanderliegen, sind, je nach Art der verwendeten Schallquellen und -mikrofone und deren Bandbreite, gegebenenfalls keine weiteren Maßnahmen zur Unterdrückung der Schwebungsfrequenz erforderlich.

Mit den Ultraschallsendern können insbesondere Ultraschallpulse erzeugt werden. Die von den Ultraschallsendern abgestrahlte Schallleistung kann beispielsweise durch eine Pulsbreitenmodulation entsprechend eingestellt werden. Die Auswertung der empfangenen Ultraschallsignale kann insbesondere über wenigstens einen Mikrocontroller oder dergleichen erfolgen. Über wenigstens einen solchen Mikrocontroller können insbesondere auch die Ultraschallsender entsprechend angesteuert werden. Die betreffende Steuer- und/oder Auswerteeinrichtung bzw. Mikrocontroller kann beispielsweise Teil des Steuergeräts des betreffenden Kraftfahrzeugs sein. Ultraschallsender und Ultraschallempfänger können insbesondere jeweils in einem Transceiver integriert sein.

## Patentansprüche

1. Verfahren zur Bereichsüberwachung, insbesondere für Kraftfahrzeuge, bei dem mittels mehrerer Ultraschallsender Ultraschallsignale in den zu überwachenden Bereich gesendet werden, mittels wenigstens eines Ultraschallempfängers reflektierte Ultraschallsignale empfangen und die empfangenen Ultraschallsignale anschließend ausgewertet werden,
**dadurch gekennzeichnet,**
**dass** über die Sendefrequenzen der Ultraschallsender die resultierende Schwebungsfrequenz so eingestellt wird, dass sie außerhalb eines vorgebbaren Frequenzbereichs liegt, wobei die Sendefrequenzen der Ultraschallsender zumindest teilweise verschieden sind.

2. Verfahren nach Anspruch 1,
**dadurch gekennzeichnet,**
**dass** die resultierende Schwebungsfrequenz über eine entsprechende manuelle oder automatische Konfiguration der Sendefrequenzen der Ultraschallsender vorzugsweise im Fahrzeug entsprechend eingestellt wird.

3. Verfahren nach Anspruch 1 oder 2,
**dadurch gekennzeichnet,**
**dass** die resultierende Schwebungsfrequenz über eine entsprechende Konfiguration der Sendefrequenzen der Ultraschallsender in der Bandendeprogrammierung entsprechend eingestellt wird.

4. Verfahren nach einem der vorhergehenden Ansprüche,
**dadurch gekennzeichnet,**
**dass** die resultierende Schwebungsfrequenz über die Sendefrequenzen der Ultraschallsender so gesteuert und/oder geregelt wird, dass sie außerhalb des vorgebbaren Frequenzbereichs liegt.

5. Verfahren nach einem der vorhergehenden Ansprüche,
**dadurch gekennzeichnet,**
**dass** die resultierende Schwebungsfrequenz so eingestellt wird, dass sie außerhalb eines vorgebbaren Frequenzbereichs liegt, der in Abhängigkeit von im zu überwachenden Bereich zu erfassenden Bewegungen gewählt ist.

6. Verfahren nach Anspruch 5,
**dadurch gekennzeichnet,**
**dass** die resultierende Schwebungsfrequenz so eingestellt wird, dass sie außerhalb eines vorgebbaren Frequenzbereichs liegt, der in Abhängigkeit von den Modulationsfrequenzen gewählt ist, die durch im zu überwachenden Bereich zu erfassende Bewegungen entstehen.

7. Ultraschall-Bereichsüberwachungssystem, insbesondere für Kraftfahrzeuge, mit mehreren Ultraschallsendern zum Aussenden von Ultraschallsignalen in den zu überwachenden Bereich, wenigstens einem Ultraschallempfänger für den Empfang reflektierter Ultraschallsignale und einer Steuer- und/oder Auswerteeinrichtung zur Ansteuerung der Ultraschallsender und zur Auswertung der empfangenen Ultraschallsignale, insbesondere zur Durchführung des Verfahrens nach einem der vorhergehenden Ansprüche,
**dadurch gekennzeichnet,**
**dass** die Steuer- und/oder Auswerteeinrichtung so ausgeführt ist, dass mittels dieser über die Sendefrequenzen der Ultraschallsender die resultierende Schwebungsfrequenz so einstellbar ist, dass sie außerhalb eines vorgebbaren Frequenzbereichs liegt, wobei die Sendefrequenzen der Ultraschallsender zumindest teilweise verschieden sind.

8. Ultraschall-Bereichsüberwachungssystem nach Anspruch 7,
**dadurch gekennzeichnet,**
**dass** die resultierende Schwebungsfrequenz über eine entsprechende, vorzugsweise automatische Konfiguration der Sendefrequenzen der Ultraschallsender entsprechend eingestellt wird.

9. Ultraschall-Bereichsüberwachungssystem nach Anspruch 7,
**dadurch gekennzeichnet,**
**dass** die betreffende Konfiguration der Sendefrequenzen der Ultraschallsender durch eine entsprechende Bandendeprogrammierung vorgegeben ist.

10. Ultraschall-Bereichsüberwachungssystem nach Anspruch 7,
**dadurch gekennzeichnet,**
**dass** die resultierende Schwebungsfrequenz über die Sendefrequenzen der Ultraschallsender durch die entsprechend ausgeführte Steuer- und/oder Auswerteeinrichtung so steuerbar und/oder regelbar ist, dass sie außerhalb des vorgebbaren Frequenzbereichs liegt.

11. Ultraschall-Bereichsüberwachungssystem nach einem der vorhergehenden Ansprüche,
**dadurch gekennzeichnet,**
**dass** die resultierende Schwebungsfrequenz durch die entsprechend ausgeführte Steuer- und/oder Auswerteeinrichtung so einstellbar ist, dass sie außerhalb eines vorgebbaren Frequenzbereichs liegt, der in Abhängigkeit von im zu überwachenden Bereich zu erfassenden Bewegungen gewählt ist.

12. Ultraschall-Bereichsüberwachungssystem nach Anspruch 11,
**dadurch gekennzeichnet,**
**dass** die resultierende Schwebungsfrequenz durch die entsprechend ausgeführte Steuer- und/oder Auswerteeinrichtung so einstellbar ist, dass sie außerhalb eines vorgebbaren Frequenzbereichs liegt, der in Abhängigkeit von den Modulationsfrequenzen gewählt ist, die durch im zu überwachenden Bereich zu erfassende Bewegungen entstehen.

13. Ultraschall-Bereichsüberwachungssystem nach einem der vorhergehenden Ansprüche,
**dadurch gekennzeichnet,**
**dass** es für eine Innenraumüberwachung ausgelegt ist.

## Claims

1. Method for area monitoring, in particular for motor vehicles, wherein ultrasonic signals are sent into the area to be monitored using a plurality of ultrasonic transmitters, reflected ultrasonic signals are received using at least one ultrasonic receiver and the received ultrasonic signals are then evaluated,
**characterized in that** using the transmitting frequencies of the ultrasonic transmitters the resulting beat frequency is set such that it lies outside a predetermined frequency range, wherein the transmitting frequencies of the ultrasonic transmitters are at least partially different.

2. Method according to claim 1,
**characterized in that** the resulting beat frequency is set accordingly via a corresponding manual or automatic configuration of the transmitting frequencies of the ultrasonic transmitters, preferably in the vehicle.

3. Method according to claim 1 or 2,
**characterized in that** the resulting beat frequency is set accordingly via a corresponding configuration of the transmitting frequencies of the ultrasonic transmitters in the end-of-production-line programming.

4. Method according to one of the preceding claims,
**characterized in that** the resulting beat frequency is controlled and/or regulated via the transmitting frequencies of the ultrasonic transmitters such that it lies outside the predetermined frequency range.

5. Method according to one of the preceding claims,
**characterized in that** the resulting beat frequency is set such that it lies outside a predetermined frequency range which is selected depending on movements to be detected in the area to be monitored.

6. Method according to claim 5,
**characterized in that** the resulting beat frequency is set such that it lies outside a predetermined frequency range which is selected depending on the modulation frequencies resulting from movements to be detected in the area to be monitored.

7. Ultrasonic area monitoring system, in particular for motor vehicles, having a plurality of ultrasonic transmitters for sending out ultrasonic signals into the area to be monitored, at least one ultrasonic receiver for receiving reflected ultrasonic signals and a control and/or evaluation device for controlling the ultrasonic transmitters and for evaluating the received ultrasonic signals, in particular for carrying out the method according to one of the preceding claims,
**characterized in that** the control and/or evaluation device is adapted such that by means thereof, using the transmitting frequencies of the ultrasonic transmitters, the resulting beat frequency can be set such that it lies outside a predetermined frequency range, wherein the transmitting frequencies of the ultrasonic transmitters are at least partially different.

8. Ultrasonic area monitoring system according to claim 7,
**characterized in that** the resulting beat frequency is set accordingly via a corresponding, preferably automatic, configuration of the transmitting frequencies of the ultrasonic transmitters.

9. Ultrasonic area monitoring system according to claim 7,
**characterized in that** the corresponding configuration of the transmitting frequencies of the ultrasonic transmitters is predetermined by a corresponding end-of-production-line programming.

10. Ultrasonic area monitoring system according to claim 7,
**characterized in that** the resulting beat frequency can be controlled and/or regulated by the correspondingly adapted control and/or evaluation device via the transmitting frequencies of the ultrasonic transmitters such that it lies outside the predetermined frequency range.

11. Ultrasonic area monitoring system according to one of the preceding claims,
**characterized in that** the resulting beat frequency can be set by the correspondingly adapted control and/or evaluation device such that it lies outside a predetermined frequency range which is selected depending on movements to be detected in the area to be monitored.

12. Ultrasonic area monitoring system according to claim 11,
**characterized in that** the resulting beat frequency can be set by the correspondingly adapted control and/or evaluation device such that it lies outside a predetermined frequency range which is selected depending on the modulation frequencies resulting from movements to be detected in the area to be monitored.

13. Ultrasonic area monitoring system according to one of the preceding claims,
**characterized in that** it is adapted for monitoring an interior area.

## Revendications

1. Procédé pour la surveillance d'une zone, en particulier pour véhicules automobiles, dans lequel des signaux ultrasonores sont émis dans la zone à surveiller au moyen de plusieurs émetteurs à ultrasons, des signaux ultrasonores réfléchis sont reçus au moyen d'au moins un récepteur à ultrasons, et les signaux ultrasonores reçus sont ensuite évalués,
**caractérisé en ce que** la fréquence de battement résultante est réglée, via les fréquences d'émission des émetteurs à ultrasons, de telle façon qu'elle tombe à l'extérieur d'une plage de fréquences prédéterminée, et les fréquences d'émission des émetteurs à ultrasons sont au moins partiellement différentes.

2. Procédé selon la revendication 1,
**caractérisé en ce que** la fréquence de battement résultante est réglée de façon correspondante, de préférence dans le véhicule, via une configuration correspondante manuelle ou automatique des fréquences d'émission des émetteurs à ultrasons.

3. Procédé selon la revendication 1 ou 2,
**caractérisé en ce que** la fréquence de battement résultante est réglée de façon correspondante via une configuration correspondante des fréquences d'émission des émetteurs à ultrasons dans la programmation des fins de bande.

4. Procédé selon l'une des revendications précédentes,
**caractérisé en ce que** la fréquence de battement résultante est commandée et/ou régulée via les fréquences d'émission des émetteurs à ultrasons de telle façon qu'elle tombe à l'extérieur de la plage de fréquences prédéterminée.

5. Procédé selon l'une des revendications précédentes,
**caractérisé en ce que** la fréquence de battement résultante est réglée de telle façon qu'elle tombe à l'extérieur d'une plage de fréquences prédéterminée, laquelle est choisie en fonction de mouvements qu'il s'agit de détecter dans la zone à surveiller.

6. Procédé selon la revendication 5,
**caractérisé en ce que** la fréquence de battement résultante est réglée de telle façon qu'elle tombe à l'extérieur d'une plage de fréquences prédéterminée, laquelle est choisie en fonction des fréquences de modulation qui apparaisse en raison de mouvements qu'il s'agit de détecter dans la zone à surveiller.

7. Système de surveillance de zone par ultrasons, en particulier pour véhicules automobiles, comprenant plusieurs émetteurs à ultrasons pour émettre des signaux ultrasonores dans la zone à surveiller, au moins un récepteur à ultrasons pour la réception de signaux ultrasonores réfléchis, et un système de commande et/ou d'évaluation pour piloter les émetteurs à ultrasons et pour évaluer les signaux ultrasonores reçus, en particulier pour mettre en oeuvre le procédé selon l'une des revendications précédentes,
**caractérisé en ce que** le système de commande et/ou d'évaluation est réalisé de telle façon qu'au moyen de celui-ci la fréquence de battement résultante peut être réglée via les fréquences d'émission des émetteurs à ultrasons de telle façon qu'elle tombe à l'extérieur d'une plage de fréquences prédéterminée, les fréquences d'émission des émetteurs à ultrasons étant au moins partiellement différentes.

8. Système de surveillance de zone par ultrasons selon la revendication 7,
**caractérisé en ce que** la fréquence de battement résultante est réglée de façon correspondante via une configuration correspondante, de préférence automatique, des fréquences d'émission des émetteurs à ultrasons.

9. Système de surveillance de zone par ultrasons selon la revendication 7,
**caractérisé en ce que** la configuration concernée des fréquences d'émission des émetteurs à ultrasons est imposée par une programmation correspondante des fins de bande.

10. Système de surveillance de zone par ultrasons selon la revendication 7,
**caractérisé en ce que** la fréquence de battement résultante est susceptible d'être commandée et/ou régulée via les fréquences d'émission des émetteurs à ultrasons par le système de commande et/ou d'évaluation réalisé de façon correspondante, de telle manière qu'elle tombe à l'extérieur de la plage de fréquences prédéterminée.

11. Système de surveillance de zone par ultrasons selon l'une des revendications précédentes,
**caractérisé en ce que** la fréquence de battement résultante peut être réglée par le système de commande et/ou d'évaluation réalisé de façon correspondante, de telle manière qu'elle tombe à l'extérieur d'une plage de fréquences prédéterminée, laquelle est choisie en fonction des mouvements qu'il s'agit de détecter dans la zone à surveiller.

12. Système de surveillance de zone par ultrasons selon la revendication 11,
**caractérisé en ce que** la fréquence de battement résultante peut être réglée par le système de commande et/ou d'évaluation réalisée de façon correspondante, de telle manière qu'elle tombe à l'extérieur d'une plage de fréquences prédéterminée, laquelle est choisie en fonction des fréquences de modulation qui se produisent en raison des mouvements qu'il s'agit de détecter dans la zone à surveiller.

13. Système de surveillance de zone par ultrasons selon l'une des revendications précédentes,
**caractérisé en ce qu'**il est conçu pour la surveillance d'un espace intérieur.
